# EUROPEAN PATENT SPECIFICATION

(11) **EP 3 912 463 B1**
(45) Date of publication and mention of the grant of the patent: **21.08.2024**
(21) Application number: 20175861.2
(22) Date of filing: 20.05.2020
(51) Int. Cl.: A01K 61/70

(54) **UNDERWATER DEVICE FOR SUBMERSIBLE ARTIFICIAL FISH HABITAT AND USE THEREOF**
UNTERWASSERVORRICHTUNG FÜR TAUCHFÄHIGE KÜNSTLICHE FISCHLEBENSRÄUME UND VERWENDUNG DAVON
DISPOSITIF SOUS-MARIN POUR HABITAT DE POISSONS ARTIFICIEL SUBMERSIBLE ET SON UTILISATION

(30) Priority: 19.05.2020 PT 2020116402
(43) Date of publication of application: 24.11.2021
(73) Proprietor: Universidade de Évora, 7000-803 Évora (PT)
(72) Inventor: Alexandre, Carlos Manuel, 7002-554 Évora (PT); Raposo de Almeida, Pedro, 7002-554 ÉVORA (PT)
(74) Representative: Couto, Cláudia

(56) References cited:
- WO-A1-00/49859
- KR-A- 20120 134 697
- KR-B1- 101 030 597
- KR-B1- 101 711 348

## Description

### TECHNICAL FIELD

The present disclosure relates to a structural arrangement applied in a fish housing to provide an artificial habitat and refuge environment to congregate, in lentic environments (lakes, dam reservoirs or ponds), freshwater fish with significantly territorial behaviours which need individual underwater shelters. More specifically, this disclosure concerns to a large-size, complex and adaptable underwater structure for sheltering species of fish usually targeted by recreational fisheries, promoting the development of fish with sufficient size to be considered "trophy" specimens.

### BACKGROUND

Reservoirs are artificial ecosystems, built for a great variety of social needs and characterized by a great homogeneity in terms of habitat. In general, these habitats have a low refuge value, diminishing the capacity of these ecosystems to support and promote the development of large fish specimens with higher value for recreational anglers (Miranda & Devries, 1996; Godinho, 2006).

Therefore, habitat enhancement actions are usually viewed as some of the most important restoration measures in any management plan devoted to reservoirs. In case of success, habitat enhancement, even if artificial, allows: (i) the development of large fish specimens that contribute to increase the economic value of sports fishing, the so called "fishing trophies"; (ii) promote the angler's effort in these areas and, ultimately, a high capture rate; and (iii) redirect the fishing pressure away from critical areas where managers want to maintain a more natural habitat or provide safe space for adult fish spawning and juvenile growth (Creque et al., 2006).

Habitat enhancement actions are often developed through the placement of the so-called Fish Aggregation Devices (FAD), which have been mostly used in marine ecosystems for professional fisheries (Dempster & Taquet, 2004). Despite its predominance in marine commercial fisheries, the use of such structures has already been conducted in freshwater ecosystems, especially in North America as part of management actions directed to the promotion of recreational fisheries.

The first documented freshwater use of an artificial structure in the United States was by the Michigan Conservation Department in the 1930s, in the form of gravel and brush piles (Wilbur, 1978). Currently, artificial structures are installed into public and private waters by local, state, and federal agencies, universities, and private interests (Stone, 1986), but most of them were not accompanied by any type of scientific study that validates its success on accumulating and sheltering fish with recreational fisheries purposes.

Types of artificial structures include evergreen trees, wooden pallets, tire bundles, brush piles, log cribs, stumps and whole trees, stake beds, rock piles, spawning boxes, gravel and cobble, cinder blocks, car bodies, cement blocks, hay bales, floating objects, mid-water reefs and a variety of commercially produced plastic fish-attracting devices (Bolding et al., 2004; Roni et al., 2005). Most of these FAD and artificial habitats used in freshwater ecosystems lack adaptability, since once they are deployed, managers are not able to change or adapt their configuration to observed fish behaviour and preferences without introducing new structures.

Fish habitats are known in the art. For example, the document US4916845 describes a device that includes a plurality of spaced apart disks located on a shaft. The shaft includes an anchor at the bottom for maintaining the device on the floor of the river or lake. The anchor includes a perforated container for a weighting material and bait. A buoy is connected to the upper end of shaft to locate the fish habitat. However, the device works only to increase fish accumulation for enhancement of fisheries catchability and does not provide constant and stable shelter for fish, especially the ones with significant territorial behaviour. It also involves the use of live bait fish to attract predator fish, which according to current European animal welfare standards and fishing regulations, is forbidden.

Others, like US4727672, include a stem member and dependent leaf like structures. However, the technology has a too simplistic configuration with the absence of isolated spaces where fish can accommodate, and does not provide enough shelter for fish specimens of different size neither for several specimens of significant territorial species.

The document KR101030597B1 describes a vortex-type complex artificial fish habitat. Contrarily to previous described devices, this one seems to be able to provide complex shelter habitat for fish from different sizes and behaviour, and also to provide a good number of isolated slots where more territorial fish can accommodate. However, the structure is mostly an artificial reef, deployed on the lake or reservoir bed and does provide the same level of habitat along the water column, preventing its use by fish that show vertical movements within the water column. Also, the structure seems to not be compatible with changes in water depth, which are common in Mediterranean aquatic ecosystems and can result in some periods where the upper part of the structure will be outside of water.

In addition to the above devices, there are numerous teachings in the art of artificial habitats, including artificial reefs. Particularly, US3933124 creates an artificial habitat by depositing helicoidal elements on the sea or freshwater environment beds. However, this document just refers to the simple accumulation of elements to be used by fish and/or other animals, which do not provide the necessary complexity for different fish species from different sizes, especially the ones with significant territorial behaviour. By being only at the bottom of the water column, these structures can only be used by benthic species. These objects are just deposited in the substrate and are subjected to being drag down by currents, animals or other phenomena, thus not providing a stable and constant habitat for fish specimens.

Artificial reefs for fish are also known like KR101711348B1, KR100952348B1, US4913094, US4947791 and US4993362 exemplify other artificial habitats. Most of these devices are too simplistic and do not provide the necessary complexity, along the water column to provide shelter for fish of different size and, especially, with significant territorial behaviour. All these technologies are very complex in terms of installation and mooring to the water body bottom, including the use of divers to install and manually construct the habitat. This is time consuming and expensive.

KR20120134697A discloses a fish reef provided with an upper circular structure, a lower circular structure, vertical supports for coupling the upper circular structure and lower circular structure forming a bonding region between the upper and the lower circular structure, a plurality of mesh panels, wherein some of the mesh panels are cut, for splitting the bonding region in slots or niches, wherein the cut mesh panels comprise a set of irregular holes, and a plurality of frames for supporting the plurality of mesh panels, wherein the plurality of frames are connected to the vertical supports and arranged radially.

Other prior art habitats either lay unmoving as debris on the bed of the water body or float only on the surface, subject to degradation and damage through drift and winter freezing. Most of the existing artificial habitat do not provide a suitable and complex vertical habitat composition, along the water column, and do not allow the use by fish from different sizes in relatively isolated slots within the structure.

Considering the state of the art associated to the fish artificial habitats and refuges to congregate freshwater fish, a person skilled in the art knows that the problem associated with the congregation of fish in artificial habitats, especially those species with significant territorial behaviours, which require complex and individualized shelters and / or with a spatial arrangement that minimizes contact between adult fishes, is not directly solved by any existing technical solution in the state of art.

These facts are disclosed in order to illustrate the technical problem addressed by the present disclosure.

### GENERAL DESCRIPTION

The present disclosure refers to a structural arrangement applied in fish housing to provide artificial habitat and suitable refuge environment in lentic ecosystems (lakes, dam reservoirs or ponds) for freshwater fish with significantly territorial behaviours, which need individual underwater shelters. Specifically, the present disclosure refers to a large-size, diverse and adaptable underwater structure for sheltering species of fish usually targeted by recreational fisheries, promoting the development of fish with sufficient size to be considered "trophy" specimens. In summary, the structural arrangement is a vertically-disposed structure, planned to be moored to the water body bottom, comprising a plurality of deep, open, radially-disposed "pie" slots arranged in single tier, divided by several meshed panels, conjugated in a circular form and with some holes/passages that simultaneously allow the movement between some of the slots while also keeping individual isolated slots that can be used by fish with a more territorial behaviour. Each slot has inside a pipe structure that simulates submerged ramifications imitating freshwater natural habitats, that can be changed, increased or descreased in complexity, at any time, depending on observed fish behaviour.

In a preferable embodiment of the present disclosure, a structural arrangement comprising:
- At least two circular bodies (1;2);
- A support central element (3);
- An anchor system (4);
- A surface signalling element (5);
- Lake/Dam reservoir bottom (6);
- Lake/Dam reservoir water surface (7);
- An eyelet to connect the surface signalling element (8);
- An external reinforcement of the upper circular body (9);
- Set of floating elements to control buoyancy of the structure (10);
- Inner area of the upper circular body, composed of a mesh with approximately 2 mm (11);
- An external reinforcement of the bottom circular body (12);
- Inner area of the bottom circular body, composed of a plastic mesh with approximately 10 mm (13);
- at least four rectangular splitting panels to divide structure in slots (14);
- An external reinforcement of the rectangular splitting panels (15);
- Inner area of the rectangular splitting panels, composed of plastic mesh with about 10 mm (16);
- At least four rectangular spitting panels with holes to connect adjacent slots (17);
- An external reinforcement of the rectangular splitting panels with holes (18);
- Inner area of the rectangular splitting panels with holes, composed of plastic mesh with about 10 mm (19);
- A set of irregular holes, in alternate splitting panels, to connect adjacent slots (20);
- A stainless-steel chain (21) to connect the structure to the anchor system;
- A pipe structure (22), stimulating a set of interwining branches.

Small-to-medium Mediterranean reservoirs are artificial ecosystems, built for a great variety of social needs, and characterized by a great homogeneity in terms of habitat. In general, these habitats have a poor refuge value, diminishing the capacity of these ecosystems to support and promote the development of large fish specimens with higher value for recreational anglers. Implementation of artificial structures to enhance target species habitat and shelter is one of the most common management actions for these ecosystems, especially in North America, but most of the existent and patented structures are, once deployed, impossible to modify or adapt, failing on providing refuges of sufficient size, complexity, variability and adaptability for target fish species.

Specifically, the present disclosure refers to the development of a vertically-disposed structure that can provide and enhance freshwater fish habitat and shelter value within small-to-medium reservoirs for fish with territorial behaviours and targeted by recreational fisheries. The proposed structure has the advantage, in comparison with structures already disclosed in the state of the art, of providing large size, complex, variable, and specially any-time modifiable and adaptable habitat, consisting of a plurality of deep, open, radially-disposed "pie" slots arranged in single tier, derived from the combination of several meshed panels, conjugated in circular form and some holes/passages that simultaneously allow the passage between some of the slots, while also keeping other individual and isolated slots for fish with more significant territorial behaviour. Each slot has inside a pipe structure that can be changed, increased or decreased in complexity, at any time, that simulates submerged ramifications imitating freshwater natural habitats.

An underwater device according to the invention is defined in claim 1.

In an embodiment, each of the plurality of frames comprises a longitudinal recess for support the plurality of mesh panels, preferably wherein each the plurality of mesh panels is substantially triangular.

In an embodiment, the frames are filled with a plastic mesh.

In an embodiment, the upper circular structure is configured to couple with a plurality of floating elements for controlling buoyancy of the device.

In an embodiment, mesh panels and cut mesh panels are alternating in the bonding region.

In an embodiment, the mesh panels and the cut mesh panels are rectangular.

In an embodiment, anchoring means are attached to the lower circular structure.

In an embodiment, the device further comprises a surface signalling element attached to upper circular structure.

In an embodiment, the upper circular structure and the lower circular structure comprises a diameter between 3,5 - 7,5 meters, in particular being between 5,2 - 6,2 meters.

In an embodiment, the anchor means are height-adjustable.

In an embodiment, the anchor means comprises a stainless-steel chain.

In an embodiment, the stainless-steel chain is between 2-10 meters, in particular being between 3-6 meters.

The use according to the invention of the underwater device for submersible artificial fish habitat described in claim 1 for fish refuge or growth in a lake, a reservoir, or a pond is defined in claim 13.

### BRIEF DESCRIPTION OF THE DRAWINGS

The following figures provide preferred embodiments for illustrating the disclosure and should not be seen as limiting the scope of disclosure.

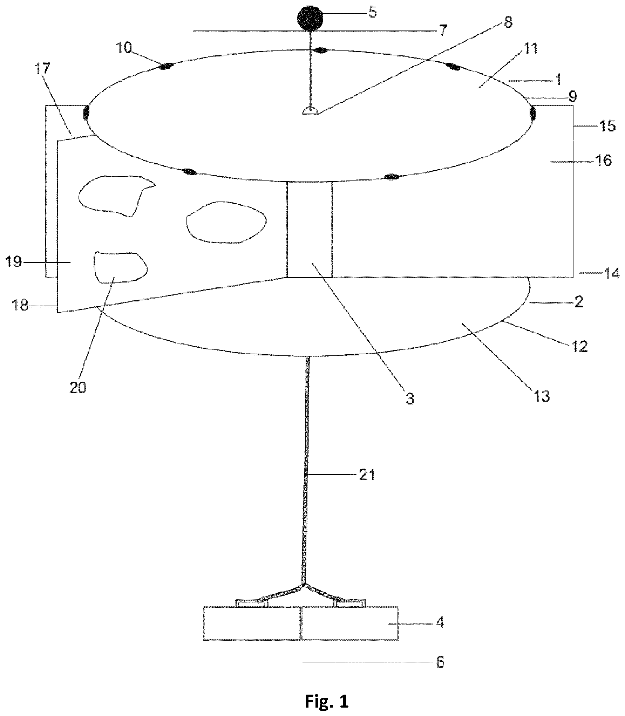

**Figure 1****:** Schematic representation of an embodiment of the main elements with a general view (side view) of the disclosed device for submersible artificial freshwater fish habitat.

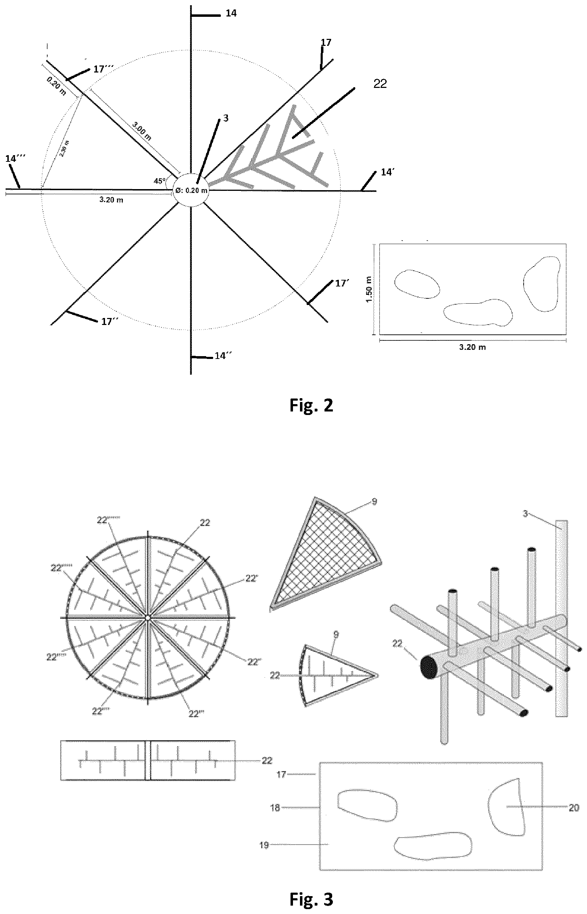

**Figure 2****:** Schematic representation of an embodiment of an upper section (top view) of the disclosed device.
**Figure 3****:** Schematic representation of the main elements of the artificial habitat structure of an embodiment.

### DETAILED DESCRIPTION

The device according to an embodiment of the present disclosure is typically comprised by: at least two circular bodies **(1;2);** a support central element **3;** an anchor system **4;** a surface signalling element **5;** lake/dam reservoir bottom substrate **6;** lake/Dam reservoir water surface **7;** an eyelet to connect the surface signalling element **8;** an external reinforcement of the upper circular body **9;** set of floating elements to control buoyancy of the structure **10;** inner area of the upper circular body, composed of a mesh with 2 mm **11;** an external reinforcement of the bottom circular body **12;** inner area of the bottom circular body, composed of a plastic mesh with 10 mm **13;** 4 rectangular splitting panels to divide structure in slots **14;** an external reinforcement of the rectangular splitting panels **15;** inner area of the rectangular splitting panels, composed of plastic mesh with 10 mm **16;** 4 rectangular spitting panels with holes to connect adjacent slots **17;** an external reinforcement of the rectangular splitting panels with holes **18;** inner area of the rectangular splitting panels with holes, composed of plastic mesh with 10 mm **19;** a set of irregular holes, in alternate splitting panels, to connect adjacent slots **20;** a stainless-steel chain **21** to connect the structure to the anchor system; a pipe structure **22,** stimulating a set of intertwining branches.

The circular upper and bottom bodies **(1;2)** have a rigid external reinforcement with a specific geometry form. In a preferable embodiment of the present disclosure, the rigid material is a polymer material selected from the group of polyvinyl chloride (PVC), cross-linked polyethylene (PEX), random copolymer polypropylene plastic (PPR) or a mixture thereof. However, these materials are not limitative of the present disclosure and they are merely examples of rigid materials which can be used as structural elements in the present disclosure.

The configuration of said bodies **(1,2)** is circular. Each circular body has a diameter ranging from approximately 6 to 7 meters. The diameter of each circular body **(1,2)** should be the same.

The inner space of the first, upper, circular body **1** is filled with a plastic mesh **11** of 2mm. This first circular body **1** is placed parallel to the water surface **7** and is provided with a rigid external reinforcement **9,** in which several elements for support **10** are set out. There will be **8** equally spaced elements for support along the upper circular body. These elements are prepared for coupling of floating material, to control the buoyancy and vertical position of the structure in the water column

The inner space of the second, bottom, circular body **2** is also filled with a mesh **13** of 10 mm. This second circular body **2** is placed parallel to the first circular body **1** and is also provided with a rigid external reinforcement of the same material as used in the upper circular body **1.**

The support element **3** with approximately 1 to 2 m of length is centrally joined to the upper circular body **1** and to the under circular body **2.** The lower end of the support element **3** joined at the second circular body **2** is connected, through an eyelet similar to the one placed in the upper circular body **8,** to an anchor system **4** to allow the structural arrangement to moor on the bottom of the lake or dam reservoir **6.** Types of bottoms to deploy this structure, should be, preferably, regular bottoms with stable substrate, to increase structure stability. The upper end of the support element **3** is provided with a signalling element **(5,** for example a floater) which is completely visible and will be floating out of water surface **7.** The signalling element **5** is connected to the upper surface of the upper circular body **(1,** through an eyelet **8** at a distance of approximately 0,5 to 1m between the centre of the upper end of the circular body **1** and the water surface **7.**

The structural arrangement is also provided with four rectangular splitting panels **(14, 14', 14"** and **14‴)** placed perpendicularly from the referred circular bodies **(1,2)** and equidistantly from each other considering the opposite ends to the connection point with the support element **3.**

The inner space of each of these rectangular panels is filled with a mesh **16** of 10 mm and it is provided with a further rigid external reinforcement **15.** Each rectangular splitting panel **(14, 14', 14"** and **14‴)** having respectively a width of approximately 50% and a length of between approximately 105% and 110% with respect to the radius of the first upper circular body **1** or second bottom circular body **2.**

Further, the structural arrangement is also provided with four communicating rectangular panels **(17, 17', 17"** and **17‴)** placed between two consecutive rectangular splitting panels **14.** These panels **(17, 17', 17"** and **17‴)** are placed equidistant from each other and to the rectangular splitting panels, considering the opposite ends to the connection point with the support element **3** duly joined to the circular bodies **(1;2).**

The inner space of each rectangular panel is filled with a mesh **19** with 10mm and it is provided with a further rigid external reinforcement **18.** Each rectangular panel **(17, 17', 17"** and **17‴)** is provided with several randomly disposed holes **20** with irregular shapes, sizes and areas, whose function is to provide passage between adjacent slots for the fish using the structure. The diameter of the holes is larger than the mesh inside of the rectangular communicating panels and should be of enough size for a fish of at least 20 cm to pass. Each rectangular communicating panel **(17, 17', 17"** and **17‴)** has respectively a width of approximately 50% and a length of between approximately 105% and 110% with respect to the radius of the first upper circular body 1 or second bottom circular body **2.**

On the deep, open, radially-disposed slots arranged in single tier, defined by the spaces between two consecutives panels, is placed and attached to the support element **3,** a pipe structure **22,** simulating a set of intertwining branches. This aims to simulate submersed tree branches, which is one of the main habitats used by territorial fish in aquatic environments, especially the specimens of larger size. Pipes used in the structure will be closed to prevent water from entering inside and increase structure weight while decrease buoyancy. The configuration and size of this pipe structure can be changed, increased or decreased in complexity, at any time.

The term "comprising" whenever used in this document is intended to indicate the presence of stated features, integers, steps, components, but not to preclude the presence or addition of one or more other features, integers, steps, components or groups thereof. The invention should not be seen in any way restricted to the embodiments described and a person with ordinary skill in the art will foresee many possibilities to modifications thereof under the scope of the appended claims.

## Claims

1. Underwater device for submersible artificial fish habitat, preferably for freshwater fish, comprising an upper circular structure (1) and a lower circular structure (2);
a vertical support (3) for coupling the upper circular structure (1) and lower circular structure (2) forming a bonding region between the upper and the lower circular structure;
a plurality of mesh panels (14, 17) wherein some of the mesh panels (17) are cut, for splitting the bonding region in slots or niches, wherein the cut mesh panels (17) comprise a set of irregular holes (20), preferably wherein the irregular holes are larger than the mesh size;
a plurality of frames (9) for supporting longitudinally the plurality of mesh panels; wherein the plurality of frames (9) are connected to the vertical support and arranged radially throughout the extension of the upper circular
structure (1) and lower circular structure (2) to reinforce the device;
wherein the vertical support (3) comprises a plurality of perpendicular-central pipes (22), each central pipe being coupled perpendicularly to a plurality of middle pipes, said pipes being located along the slots of the bonding region to form a tree structure;
and anchoring means (4) for anchoring the underwater device to the bottom of the lake or dam reservoir.

2. Device according to the previous claim wherein each of the plurality of frames (9) comprises a longitudinal recess for support the plurality of mesh panels (14), preferably wherein each the plurality of mesh panels (14) is substantially triangular.

3. Device according to any of the previous claims wherein the frames (9) are filled with a plastic mesh.

4. Device according to any of the previous claims wherein the upper circular structure (1) is configured to couple with a plurality of floating elements for controlling buoyancy of the device.

5. Device according to any of the previous claims wherein the mesh panels (14) and the cut mesh panels (17) are alternating in the bonding region.

6. Device according to any of the previous claims wherein the mesh panels (14) and the cut mesh panels (17) are rectangular.

7. Device according to any of the previous claims wherein anchoring means (4) are attached to the lower circular structure (2).

8. Device according to any of the previous claims further comprises a surface signaling element (5) attached to upper circular structure (1).

9. Device according to any of the previous claims wherein the upper circular structure (1) and the lower circular structure (2) comprises a diameter between 3,5 - 7,5 meters, in particular being between 5,2 - 6,2 meters.

10. Device according to any of the previous claims wherein the anchor means (4) are height-adjustable.

11. Device according to any of the previous claims wherein the anchor means (4) comprises a stainless-steel chain (21).

12. Device according to the previous claim wherein the stainless-steel chain is between 2 - 10 meters, in particular being between 3 - 6 meters.

13. Use of the underwater device for submersible artificial fish habitat described in any of the previous claims for fish refuge or growth in a lake, a reservoir, or a pond.

## Patentansprüche

1. Unterwasservorrichtung für tauchfähige künstliche Fischlebensräume, vorzugsweise für Süßwasserfische, bestehend aus:
Einer oberen kreisförmigen Struktur (1) und einer unteren kreisförmigen Struktur (2);
einem vertikalen Träger (3) zur Verbindung der oberen kreisförmigen Struktur (1) und der unteren kreisförmigen Struktur (2), womit ein Bindungsbereich zwischen der oberen und der unteren kreisförmigen Struktur gebildet wird;
einer Vielzahl von Gitterplatten (14, 17)
worin einige der
Gitterplatten (17)ausgeschnitten sind,
um den Bindungsbereich in Slots oder Nischen aufzuteilen, worin die ausgeschnittenen Gitterplatten (17) einen Satz unregelmäßiger Löcher (20) aufweisen, wobei die unregelmäßigen Löcher vorzugsweise größer als die Maschenweite sind;
einer Vielzahl von Rahmen (9) zur Längsabstützung der Vielzahl von Gitterplatten, worin die Vielzahl der Rahmen (9) mit dem vertikalen Träger verbunden sind und radial über die Verlängerung
der oberen kreisförmigen
Struktur (1) und der unteren kreisförmigen Struktur (2) angeordnet sind, um die Vorrichtung zu verstärken;
worin der vertikale Träger (3) eine Vielzahl von senkrechten zentralen Rohren (22) aufweist, wobei jedes zentrale Rohr senkrecht mit einer
Vielzahl von Mittelrohren gekoppelt ist, die besagten Rohre sind
entlang der Slots des Bindungsbereichs angeordnet, um eine Baumstruktur zu bilden
und Verankerungsmittel (4) für die Verankerung der
Unterwasservorrichtung am Seeboden oder am Boden des Staudamms.

2. Vorrichtung gemäß dem vorhergehenden Anspruch, worin jede der Vielzahl von Rahmen (9) eine Längsaussparung zur Abstützung der Vielzahl von Gitterplatten (14) aufweist, vorzugsweise worin jede der Vielzahl von Gitterplatten (14) im Wesentlichen dreieckig ist.

3. Vorrichtung gemäß einem der vorhergehenden Ansprüche, worin die Rahmen (9) ein Kunststoffnetz enthalten.

4. Vorrichtung gemäß einem der vorhergehenden Ansprüche, worin die obere kreisförmige Struktur (1) konfiguriert ist, mit einer Vielzahl von Schwimmelementen gekoppelt zu werden, um den Auftrieb der Vorrichtung zu steuern.

5. Vorrichtung gemäß einem der vorhergehenden Ansprüche, worin die Gitterplatten (14) und die ausgeschnittenen Gitterplatten (17) im Bindungsbereich abwechselnd angeordnet sind.

6. Vorrichtung gemäß einem der vorhergehenden Ansprüche, worin die Gitterplatten (14) und die ausgeschnittenen Gitterplatten (17) rechteckig sind.

7. Vorrichtung gemäß einem der vorhergehenden Ansprüche, worin die Verankerungsmittel (4) an der unteren kreisförmigen Struktur (2) befestigt sind.

8. Vorrichtung gemäß einem der vorhergehenden Ansprüche, die ferner ein Oberflächensignalelement (5) aufweist, das an der oberen kreisförmigen Struktur (1) befestigt ist.

9. Vorrichtung gemäß einem der vorhergehenden Ansprüche, worin die obere kreisförmige Struktur (1) und die untere kreisförmige Struktur (2) einen Durchmesser zwischen 3,5 - 7,5 Meter, insbesondere zwischen 5,2 - 6,2 Meter aufweisen.

10. Vorrichtung gemäß einem der vorhergehenden Ansprüche, worin die Verankerungsmittel (4) höhenverstellbar sind.

11. Vorrichtung gemäß einem der vorhergehenden Ansprüche, worin das Verankerungsmittel (4) eine Edelstahlkette (21) aufweist.

12. Vorrichtung gemäß dem vorhergehenden Anspruch, worin die Länge der Edelstahlkette zwischen 2-10 Meter, insbesondere zwischen 3-6 Meter beträgt.

13. Verwendung der in einem der vorhergehenden Ansprüche beschriebenen Unterwasservorrichtung für tauchfähige künstliche Fischlebensräume für die Zuflucht oder das Wachstum von Fischen in einem See, einem Reservoir oder einem Teich.

## Revendications

1. Dispositif subaquatique pour habitat de poissons artificiel submersible, de préférence pour poissons d'eau douce, comprenant
une structure circulaire supérieure (1) et une structure circulaire inférieure (2) ;
un support vertical (3) pour l'accouplement de la structure circulaire supérieure (1) et de la structure circulaire inférieure (2) formant une région de liaison entre les structures circulaires supérieure et inférieure ;
une pluralité de panneaux en maillage (14, 17)
dans lequel certains des panneaux
en maillage (17) sont découpés,
pour diviser la région de liaison en fentes ou niches, dans lequel les panneaux en maillage découpées (17) comprennent un ensemble de trous irréguliers (20), de préférence dans lesquels les trous irréguliers sont plus grands que la taille du maillage ;
une pluralité de cadres (9) pour supporter longitudinalement la pluralité de panneaux en maillage ; dans lequel la pluralité de cadres (9) sont reliés au support vertical et agencés radialement sur toute l'extension
de la structure circulaire
supérieure (1) et de la structure circulaire inférieure (2) pour renforcer le dispositif ;
dans lequel le support vertical (3) comprend une pluralité de tuyaux centraux perpendiculaires (22), chaque tuyau central étant couplé perpendiculairement à une
pluralité de tuyaux intermédiaires, lesdits tuyaux
étant situés le long des fentes de la région de liaison pour former une structure arborescente ;
et des moyens d'ancrage (4) pour ancrer le
dispositif subaquatique au fond du lac ou du réservoir du barrage.

2. Dispositif selon la revendication précédente dans lequel chacun de la pluralité de cadres (9) comprend un évidement longitudinal pour supporter la pluralité de panneaux en maillage (14), de préférence dans lequel chacun de la pluralité de panneaux en maillage (14) est sensiblement triangulaire.

3. Dispositif selon l'une quelconque des revendications précédentes dans lequel les cadres (9) sont remplis d'un maillage en plastique.

4. Dispositif selon l'une quelconque des revendications précédentes, dans lequel la structure circulaire supérieure (1) est configurée pour s'accoupler à une pluralité d'éléments flottants pour contrôler la flottabilité du dispositif.

5. Dispositif selon l'une quelconque des revendications précédentes dans lequel les panneaux en maillage (14) et les panneaux en maillage découpés (17) sont en alternance dans la région de liaison.

6. Dispositif selon l'une quelconque des revendications précédentes dans lequel les panneaux en maillage (14) et les panneaux en maillage découpés (17) sont rectangulaires.

7. Dispositif selon l'une quelconque des revendications précédentes dans lequel des moyens d'ancrage (4) sont fixés à la structure circulaire inférieure (2).

8. Dispositif selon l'une quelconque des revendications précédentes, comprenant en outre un élément de signalisation de surface (5) fixé à la structure circulaire supérieure (1) .

9. Dispositif selon l'une quelconque des revendications précédentes dans lequel la structure circulaire supérieure (1) et la structure circulaire inférieure (2) comprennent un diamètre entre 3,5 et 7,5 mètres, en particulier entre 5,2 et 6,2 mètres.

10. Dispositif selon l'une quelconque des revendications précédentes dans lequel les moyens d'ancrage (4) sont réglables en hauteur.

11. Dispositif selon l'une quelconque des revendications précédentes dans lequel les moyens d'ancrage (4) comprennnent une chaîne en acier inoxydable (21).

12. Dispositif selon la revendication précédente dans lequel la chaîne en acier inoxydable mesure entre 2 et 10 mètres, en particulier entre 3 et 6 mètres.

13. Utilisation du dispositif subaquatique pour habitat de poissons artificiel submersible décrit selon l'une quelconque des revendications précédentes pour le refuge ou la croissance des poissons dans un lac, un réservoir ou un étang.
